# EUROPEAN PATENT SPECIFICATION

(11) **EP 2 677 016 B1**
(45) Date of publication and mention of the grant of the patent: **22.04.2015**
(21) Application number: 13151847.4
(22) Date of filing: 18.01.2013
(51) Int. Cl.: C09J 133/06, G06F 3/041

(54) **Display devices and methods of manufacturing display devices**
Anzeigevorrichtungen und Herstellungsverfahren für Anzeigevorrichtungen
Dispositifs d'affichage et procédés de fabrication de dispositifs d'affichage

(30) Priority: 19.06.2012 KR 20120065604
(43) Date of publication of application: 25.12.2013
(73) Proprietor: Samsung Display Co., Ltd., Yongin-City, Gyeonggi-Do (KR)
(72) Inventor: Han, Kwan-Young, Yongin-City (KR); Park, Jung-Mok, Yongin-City (KR)
(74) Representative: Gulde & Partner

(56) References cited:
- WO-A1-00/77113
- WO-A1-2012/023567
- KR-A- 20110 034 556
- US-A1- 2012 094 037

## Description

The present invention relates to display devices and methods of manufacturing display devices. More particularly, example embodiments of the invention relate to display devices including touch sensing structures and methods of manufacturing display devices including touch sensing structures.

### Description of the Related Art

A touch screen panel (TSP) may generally recognize a contact position by the hand of a user or an object through touch sensors thereof, and transform the contact position into an electrical signal to input data and control a device. The touch screen panel includes a capacitive touch screen panel, a resistive touch screen panel and an optical touch screen panel. The touch screen panel may ensure relatively small thickness, small weight and easily controllable, so that the touch screen panel has been widely employed in various electronic and electric apparatuses.

The touch screen panel employed in a display device such as an organic light emitting display (OLED) device or a liquid crystal display (LCD) device may a glass type touch screen panel and a polymer type touch screen panel depending on a material of a base film included in the touch screen panel. The glass type touch screen panel may have a weakness to external impact and may be relatively heavy. On the other hand, the polymer type touch screen panel may include a base film having an optically anisotropic polymer, and the base film changes polarization characteristics of incident light. Therefore, the conventional display device may include the polymer type touch screen panel only on a polarization plate, and design and manufacturing process of the display device may be restricted thereto.

### SUMMARY OF THE INVENTION

Example embodiments provide a display device including a touch sensing structure having an improved reflectivity and a structure easily reworkable.

Example embodiments provide a method of manufacturing a display device including a touch sensing structure having an improved reflectivity and a structure easily reworkable.

The present invention provides a display device according to claim 1 as well as a corresponding manufacturing method of the display devise with the features of claim 14.

Further embodiments of the invention could be learned from the dependent claims and the following description.

According to the invention, the display device includes a touch sensing structure including a phase retardation layer and at least one kind of sensing patterns (directly) disposed on at least one face of the phase retardation layer. The display device does not need an additional base film for supporting the sensing patterns, so that the base film does not change polarization characteristics of incident light. This makes it possible to arrange a polarization plate on the touch sensing structure. Therefore, reflection of external light on the touch sensing structure is reduced to improve visibility of the display panel. Further, the display panel includes an adhesion layer having a side-chain crystallizable polymer. The adhesion layer has a sufficiently large bonding strength thereby to combine components of the display device at a room temperature, and the adhesion layer has a sufficiently small bonding strength to be easily peeled off at a temperature above the melting temperature of the side-chain crystallizable polymer (e.g., 70 °C). Therefore, the display device is easily reworkable.

WO-A-2012/02356 and KR-A-2011/34566 disclose copolymers of hydroxyethyl methacrylate, acrylate and acrylamide as adhesive sheets in touch screens.

US-A-2012/94037 discloses touch screens including adhesive of copolymer of hydroxyethyl methacrylate and acrylate using monomers containing 16 or more carbon atoms.

WO-A-00/77113 discloses polymers of hydroxyethyl acrylate and acrylate of 16 carbon atoms or more of melting point 30-100°C with crystallizable side chains used as adhesives for tiles.

### BRIEF DESCRIPTION OF THE DRAWINGS

Example embodiments can be understood in more detail from the following description taken in conjunction with the accompanying drawings, in which:
FIG. 1 is a cross sectional view illustrating a display device in accordance with example embodiments;
FIG. 2 is a cross sectional view illustrating a display panel of a display device in accordance with example embodiments;
FIG. 3 is an exploded plan view illustrating a touch sensing structure of a display device in accordance with example embodiments;
FIG. 4 is a cross sectional view illustrating a display device in accordance with some example embodiments;
FIG. 5 is a cross sectional view illustrating a display device in accordance with some example embodiments;
FIG. 6 is a cross sectional view illustrating a display device in accordance with some example embodiments; and
FIGS. 7 to 10 are cross sectional views illustrating a method of manufacturing a display device in accordance with example embodiments.

### DESCRIPTION OF EMBODIMENTS

The example embodiments are described more fully hereinafter with reference to the accompanying drawings,

The invention relates to a display device according claim 1 and a method according claim 12. It will be understood that when an element or layer is referred to as being "on," "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like or similar reference numerals refer to like or similar elements throughout. As used herein, the term "and/or" includes any and all combinations of one or more of the associated listed items.

It will be understood that, although the terms first, second, third etc. may be used herein to describe various elements, components, regions, layers, patterns and/or sections, these elements, components, regions, layers, patterns and/or sections should not be limited by these terms. These terms are only used to distinguish one element, component, region, layer pattern or section from another region, layer, pattern or section. Thus, a first element, component, region, layer or section discussed below could be termed a second element, component, region, layer or section without departing from the teachings of example embodiments.

Spatially relative terms, such as "beneath," "below," "lower," "above," "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the exemplary term "below" can encompass both an orientation of above and below. The device may be otherwise oriented (rotated 90 degrees or at other orientations) and the spatially relative descriptors used herein interpreted accordingly.

The terminology used herein is for the purpose of describing particular example embodiments only and is not intended to be limiting of the invention. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Example embodiments are described herein with reference to cross sectional illustrations that are schematic illustrations of illustratively idealized example embodiments (and intermediate structures) of the invention. As such, variations from the shapes of the illustrations as a result, for example, of manufacturing techniques and/or tolerances, are to be expected. Thus, example embodiments should not be construed as limited to the particular shapes of regions illustrated herein but are to include deviations in shapes that result, for example, from manufacturing. The regions illustrated in the figures are schematic in nature and their shapes are not intended to illustrate the actual shape of a region of a device and are not intended to limit the scope of the invention.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

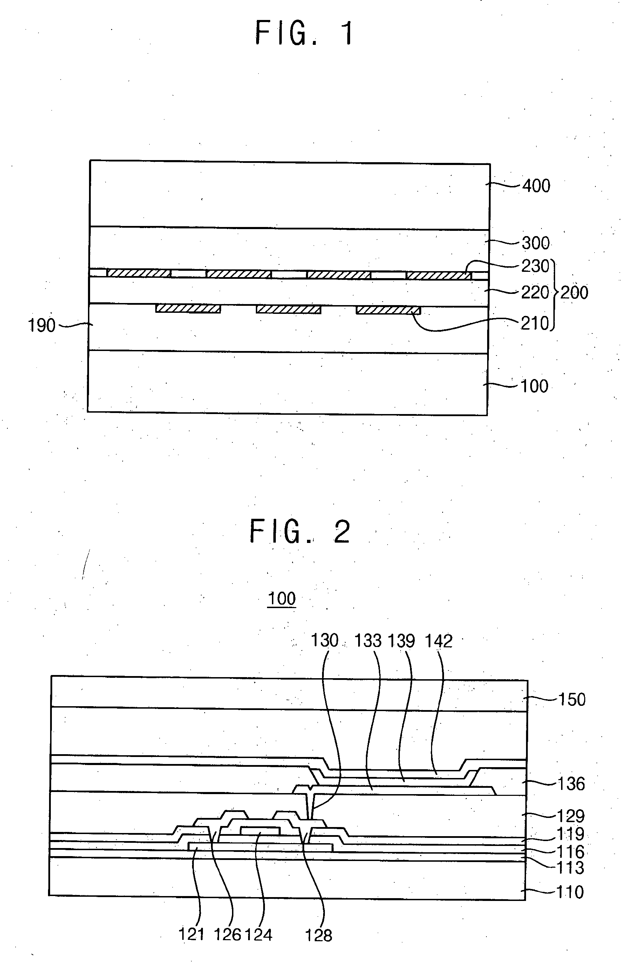

FIG. 1 is a cross sectional view illustrating a display device in accordance with example embodiments, and FIG. 2 is a cross sectional view illustrating a display panel of a display device in accordance with example embodiments.

Referring to FIG. 1, the display device includes a display panel 100, a touch sensing structure 200 disposed on the display panel 100, a polarization plate 300, a window 400 and an adhesion layer 190 for bonding the display panel 100 and the touch sensing structure 200. The touch sensing structure 200 includes a phase retardation layer 220 and at least one kind of sensing patterns. For example, the at least one kind of the sensing patterns may include first sensing pattern 210 and second sensing pattern 230. Although it is not illustrated in FIG. 1, additional adhesion layers may be disposed to improve an adhesion strength between the touch sensing structure 200 and the polarization plate 300 or between the polarization plate 300 and the window 400.

Referring to FIGS. 1 and 2, the display panel 100 includes a first substrate 110, a switching device, a first electrode 133, a light emitting structure 139, a second electrode 142, a second substrate 150, etc.

A buffer layer 113 may be disposed on the first substrate 110. The first substrate 110 may include a transparent insulation substrate. For example, the first substrate 110 may include a glass substrate, a quartz substrate, a transparent resin substrate, etc. Examples of the transparent resin substrate for the first substrate 110 may include polyimide-based resin, acryl-based resin, polyacrylate-based resin, polycarbonate-based resin, polyether-based resin, sulfonic acid containing resin, polyethyleneterephthalate-based resin, etc.

In example embodiments, the buffer layer 113 may prevent diffusion of metal atoms and/or impurities from the first substrate 110. Additionally, the buffer layer 113 may adjust heat transfer rate of a successive crystallization process for an active layer 121, to thereby obtain a substantially uniform active layer 121. In case that the first substrate 110 may have a relatively irregular surface, the buffer layer 113 may improve flatness of the surface of the first substrate 110. The buffer layer 113 may be formed using a silicon compound. For example, the buffer layer 113 may include silicon oxide (SiOx), silicon nitride (SiNx), silicon oxynitride (SiOxNy), silicon oxycarbide (SiOxCy), silicon carbon nitride (SiCxNy), etc. These may be used alone or in a mixture thereof. The buffer layer 113 may have a single layer structure or a multi-layered structure, which may include a silicon oxide film, a silicon nitride film, a silicon oxynitride film, a silicon oxycarbide film and/or a silicon carbon nitride film.

The switching device may be provided on the buffer layer 113. In example embodiments, the switching device may include a thin film transistor (TFT) having the active layer 121 that may contain silicon (Si). Here, the switching device may include the active layer 121, a gate insulation layer 116, a gate electrode 124, a source electrode 126, a drain electrode 128, etc. In some example embodiments, the switching device may include an oxide semiconductor device having an active layer that may contain a semiconductor oxide.

When the switching device includes the TFT, the active layer 121 may be disposed on the buffer layer 113. The active layer 121 may have a source region and a drain region both of which are doped with impurities. The active layer 121 may additionally include a channel region provided between the source region and the drain region.

In example embodiments, a semiconductor layer (not illustrated) may be formed on the buffer layer 113, and then a preliminary active layer (not illustrated) may be formed on the buffer layer 113 by patterning the semiconductor layer. The crystallization process may be performed about the preliminary active layer to form the active layer 121 on the buffer layer 113. When the semiconductor layer includes amorphous silicon, the active layer 121 may include polysilicon. The crystallization process for forming the active layer 121 may include a laser irradiation process, a thermal treatment process, a thermal process utilizing a catalyst, etc.

The gate insulation layer 116 may be disposed on the buffer layer 113 to substantially cover the active layer 121. The gate insulation layer 116 may be formed using silicon oxide, metal oxide, etc. Examples of metal oxide in the gate insulation layer 116 may include hafnium oxide (HfOx), aluminum oxide (AlOx), zirconium oxide (ZrOx), titanium oxide (TiOx), tantalum oxide (TaOx), etc. These may be used alone or in a combination thereof. In example embodiments, the gate insulation layer 116 may be uniformly formed on the buffer layer 113 along a profile of the active layer 121. Here, the gate insulation layer 116 may have a substantially small thickness, such that a stepped portion may be generated at a portion of the gate insulation layer 116 adjacent to the active layer 121. In some example embodiments, the gate insulation layer 116 may have a relatively large thickness for sufficiently covering the active layer 121, so that the gate insulation layer 116 may have a substantially level surface.

The gate electrode 124 may be located on the gate insulation layer 116. For example, the gate electrode 124 may be positioned on a portion of the gate insulation layer 116 under which the active layer 121 is located. In example embodiments, a first conductive layer (not illustrated) may be formed on the gate insulation layer 116, and then the first conductive layer may be partially etched by a photolithography process or an etching process using an additional etching mask. Hence, the gate electrode 124 may be provided on the gate insulation layer 116. The gate electrode 124 may include metal, alloy, conductive metal oxide, a transparent conductive material, etc. For example, the gate electrode 124 may be formed using aluminum (AI), alloy containing aluminum, aluminum nitride (AINx), silver (Ag), alloy containing silver, tungsten (W), tungsten nitride (WNx), copper (Cu), alloy containing copper, nickel (Ni), alloy containing nickel, chrome (Cr), chrome nitride (CrNx), molybdenum (Mo), alloy containing molybdenum, titanium (Ti), titanium nitride (TiNx), platinum (Pt), tantalum (Ta), tantalum nitride (TaNx), neodymium (Nd), scandium (Sc), strontium ruthenium oxide (SRO), zinc oxide (ZnOx), indium tin oxide (ITO), tin oxide (SnOx), indium oxide (InOx), gallium oxide (GaOx), indium zinc oxide (IZO), etc. These may be used alone or in a combination thereof. In example embodiments, the gate electrode 124 may have a single layer structure or a multi layer structure, which may include a metal film, an alloy film, a metal nitride film, a conductive metal oxide film and/or a transparent conductive film.

Although it is now illustrated in FIG. 2, a gate line may be formed on the gate insulation layer 116 while forming the gate electrode 124 on the gate insulation layer 116. The gate electrode 124 may make contact with the gate line, and the gate line may extend on the gate insulation layer 116 along a first direction.

An insulating interlayer 119 may be disposed on the gate insulation layer 116 to cover the gate electrode 124. The insulating interlayer 119 may electrically insulate the source and the drain electrodes 126 and 128 from the gate electrode 124. The insulating interlayer 119 having a substantially uniform thickness may be conformally formed on the gate insulation layer 116 along a profile of the gate electrode 124. Thus, a stepped portion may be generated at a portion of the insulating interlayer 119 adjacent to the gate electrode 124. The insulating interlayer 119 may be formed using a silicon compound. For example, the insulating interlayer 119 may include silicon oxide, silicon nitride, silicon oxynitride, silicon oxycarbide, silicon carbon nitride and the like. These may be used alone or in a mixture thereof. In example embodiments, the insulating interlayer 119 may have a single layer structure or a multi layer structure, which may include a silicon oxide film, a silicon nitride film, a silicon oxynitride film, a silicon oxycarbide film and/or a silicon carbon nitride film.

As illustrated in FIG. 2, the source electrode 126 and the drain electrode 128 may be disposed on the insulating interlayer 119. The source and the drain electrodes 126 and 128 may be separated from each other by a predetermined distance substantially centering the gate electrode 124. The source and the drain electrodes 126 and 128 may pass through the insulating interlayer 119, and may make contact with the source and the drain regions of the active layer 121, respectively.

In example embodiments, the insulating interlayer 119 may include contact holes exposing the source and the drain regions, respectively. Then, a second conductive layer (not illustrated) may be formed on the insulating interlayer 119 to substantially fill the contact holes. The second conductive layer may be removed until the insulating interlayer 119 is exposed, so that the source and the drain electrodes 126 and 128 may be formed on the source and the drain regions, respectively. Each of the source and the drain electrodes 126 and 128 may include metal, alloy, metal nitride, conductive metal oxide, a transparent conductive material, etc. For example, each of the source and the drain electrodes 126 and 128 may be formed using aluminum, alloy containing aluminum, aluminum nitride, silver, alloy containing silver, tungsten, tungsten nitride, copper, alloy containing copper, nickel, alloy containing nickel, chrome, chrome nitride, molybdenum, alloy containing molybdenum, titanium, titanium nitride, platinum, tantalum, tantalum nitride, neodymium, scandium, strontium ruthenium oxide, zinc oxide, indium tin oxide, tin oxide, indium oxide, gallium oxide, indium zinc oxide, etc. These may be used alone or in a combination thereof. In example embodiments, each of the source and the drain electrodes 126 and 128 may have a single layer structure or a multi layer structure, which may include a metal film, an alloy film, a metal nitride film, a conductive metal oxide film and/or a transparent conductive film.

Although it is not illustrated in FIG. 2, a data line may be formed on the insulating interlayer 119 while forming the source and the drain electrodes 126 and 128. The data line may extend on the insulating interlayer 119 along a second direction. In this case, the second direction of the date line may be substantially perpendicular to the first direction of the gate line.

As formation of the source and the drain electrodes 126 and 128 on the insulating interlayer 119, the switching device may be provided on the first substrate 110. The switching device may include the TFT that may have the active layer 121, the gate insulation layer 116, the gate electrode 124, the source electrode 126 and the drain electrode 128.

Referring now to FIG. 2, an insulation layer 129 may be disposed on the insulating interlayer 119. The insulation layer 129 may have a single layer structure or a multi layer structure including at least two insulation films. In example embodiments, a planarization process may be executed on the insulation layer 129 to enhance the flatness of the insulation layer 129. For example, the insulation layer 129 may have a substantially level surface by a chemical mechanical polishing (CMP) process, an etch-back process, etc. The insulation layer 129 may be formed using an organic material. For example, the insulation layer 129 may include photoresist, acryl-based resin, polyimide-based resin, polyamide-based resin, siloxane-based resin, etc. These may be used alone or in a combination thereof. Alternatively, the insulation layer 129 may include an inorganic material. For example, the insulation layer 129 may be formed using silicon oxide, silicon nitride, silicon oxynitride, silicon oxycarbide, aluminum, magnesium, zinc, hafnium, zirconium, titanium, tantalum, aluminum oxide, titanium oxide, tantalum oxide, magnesium oxide, zinc oxide, hafnium oxide, zirconium oxide, titanium oxide, etc. These may be used alone or in a mixture thereof.

The insulation layer 129 may be partially etched by a photolithography process or an etching process using an additional etching mask such as a hard mask, so that a contact hole 130 may be formed through the insulation layer 129. The contact hole 130 may partially expose the drain electrode 128 of the switching device. In example embodiments, the contact hole 130 may have a sidewall inclined by a predetermined angle relative to the first substrate 110. For example, the contact hole may have an upper width substantially larger than a lower width thereof.

The first electrode 133 may be disposed on the insulation layer 129 to fill the contact hole 130 formed through the insulation layer 129. Thus, the first electrode 133 may make contact with the drain electrode 128 exposed by the contact hole 130. In some example embodiments, a contact, a plug or a pad may be formed in the contact hole, and then the first electrode 133 may be formed on the contact, the plug or the pad. Here, the first electrode 133 may be electrically connected to the drain electrode 128 through the contact, the plug, the pad, etc.

The first electrode 133 may include a reflective material or a transmissive material in accordance with the emission type of the display device. For example, the first electrode 133 may be formed using aluminum, alloy containing aluminum, aluminum nitride, silver, alloy containing silver, tungsten, tungsten nitride, copper, alloy containing copper, nickel, alloy containing nickel, chrome, chrome nitride, molybdenum, alloy containing molybdenum, titanium, titanium nitride, platinum, tantalum, tantalum nitride, neodymium, scandium, strontium ruthenium oxide, zinc oxide, indium tin oxide, tin oxide, indium oxide, gallium oxide, indium zinc oxide, etc. These may be used alone or in a combination thereof. In example embodiments, the first electrode 133 may have a single layer structure or a multi layer structure, which may include a metal film, an alloy film, a metal nitride film, a conductive metal oxide film and/or a transparent conductive film.

A pixel defining layer 136 may be disposed on the first electrode 133 and the insulation layer 129. The pixel defining layer 136 may include an organic material or an inorganic material. For example, the pixel defining layer 136 may be formed using photoresist, acryl-based resin, polyacryl-based resin, polyimide-based resin, a silicon compound, etc. In example embodiments, the pixel defining layer 136 may be partially etched to form an opening that may partially expose the first electrode 133. The opening of the pixel defining layer 136 may define a luminescent region and a non-luminescent region of the display panel 100. For example, a portion of the display panel 100 having the opening of the pixel defining layer 136 may be the luminescent region of the display device, while another portion of the display panel 100 around the opening of the pixel defining layer 136 may be the non-luminescent region of the display device.

The light emitting structure 139 may be positioned on the first electrode 133 exposed by the opening of the pixel defining layer 136. The light emitting structure 139 may extend on a sidewall of the opening of the pixel defining layer 136. The light emitting structure 139 may be formed by a laser induced thermal imaging process, a printing process, etc. The light emitting structure 139 may include an organic light emitting layer (EL), a hole injection layer (HIL), a hole transfer layer (HTL), an electron transfer layer (ETL), an electron injection layer (EIL), etc. In example embodiments, a plurality of organic light emitting layers may be formed using light emitting materials for generating different colors of light such as a red color of light (R), a green color of light (G) and a blue color of light (B) in accordance with color pixels of the display device. In some example embodiments, the organic light emitting layer of the light emitting structure 139 may include a plurality of light emitting material stacks for generating a red color of light, a green color of light and a blue color of light to thereby emit a white color of light. When the organic light emitting layer emits the white color of light, the display panel may further include a color filter over the organic light emitting layer to improve the purity of colors of light.

The second electrode 142 may be disposed on the light emitting structure 139 and the pixel defining layer 136. The second electrode 142 may include a transmissive material or a reflective material in accordance with the emission type of the display device. For example, the second electrode 142 may be formed using aluminum, alloy containing aluminum, aluminum nitride, silver, alloy containing silver, tungsten, tungsten nitride, copper, alloy containing copper, nickel, alloy containing nickel, chrome, chrome nitride, molybdenum, alloy containing molybdenum, titanium, titanium nitride, platinum, tantalum, tantalum nitride, neodymium, scandium, strontium ruthenium oxide, zinc oxide, indium tin oxide, tin oxide, indium oxide, gallium oxide, indium zinc oxide, etc. These may be used alone or in a combination thereof. In example embodiments, the second electrode 142 may also have a single layer structure or a multi layer structure, which may include a metal film, an alloy film, a metal nitride film, a conductive metal oxide film and/or a transparent conductive film.

The second substrate 150 may be positioned on the second electrode 142. The second substrate 150 may include a transparent insulation substrate. For example, the second substrate 150 may include a glass substrate, a quartz substrate, a transparent resin substrate, etc. In example embodiments, a predetermined space may be provided between the second electrode 142 and the second substrate 150. This space may be substantially filled with an air or an inactive gas such as a nitrogen (N₂) gas. In some example embodiments, a protection layer (not illustrated) may be additionally disposed between the second electrode 142 and the second substrate 150. Here, the protection layer may include a resin, for example, photoresist, acryl-based resin, polyimide-based resin, polyamide-based resin, siloxane-based resin, etc. These may be used or in a combination thereof.

Although the display device includes the display panel 100 such as an organic light emitting display (OLED) panel illustrated in FIG. 2, the display device may include other various display panels such as a liquid crystal display panel, an electrophoretic display panel, a plasma display panel, etc. That is, the touch sensing structure 200 according to example embodiments may be employed in various display devices such as a liquid crystal display panel, an electrophoretic display panel, a plasma display panel, etc.

Referring now to FIG. 1, the touch sensing structure 200 of the display device is disposed on the display panel 100.

The touch sensing structure 200 includes a phase retardation layer 220 and the at least one kind of sensing patterns. In example embodiments, the phase retardation layer 220 may include a λ/4 (quarter wave) phase retardation film. The λ/4 phase retardation film may assign a phase retardation of about λ/4 to two polarizing components crossing a substantially right angle and being substantially parallel to an optical axis of the phase retardation layer 220, and A is a wavelength of about 380nm to about 780nm. Thus, the λ/4 phase retardation film may substantially convert a linear polarizing component of incident light into a circularly polarizing component of incident light or may change the circularly polarizing component into the linear polarizing component. That is, the phase retardation layer 220 may change a linear polarizing component of light emitted from the display panel 100 into a circularly polarizing component of light or may convert a circularly polarizing component of light emitted from the display panel 100 into the linear polarizing component. The phase retardation layer 220 may assign a predetermined retardation value to the polarizing components of incident light. For example, the phase retardation layer 220 may provide the polarizing components of incident light with a retardation value in a range of 100nm to 200nm.

The phase retardation layer 220 may include a polymer birefringent film, a liquid crystal alignment film, a liquid crystal polymer alignment film formed on a base film, etc. For example, the phase retardation layer 220 may be formed using polycarbonate, polyvinylalcohol, polystyrene, polypropylene, polyolefine, polyarylate, polyamide, polymethylmethacrylate, polyethyleneterephthalate, triacetylcelluose, etc.

In example embodiments, the first and the second sensing patterns 210 and 230 may be directly disposed on opposite faces of the phase retardation layer 220, respectively. For example the first sensing pattern 210 of the touch sensing structure 200 may be directly formed on a first face of the phase retardation layer 220 (e.g., a bottom face of the phase retardation layer 220) while the second sensing pattern 230 may be directly formed on a second face of the phase retardation layer 220 (e.g., an upper face of the phase retardation layer 220). In some example embodiments, the first sensing pattern 210 may be positioned on the second face of the phase retardation layer 220 whereas the second sensing pattern 230 may be located on the first face of the phase retardation layer 220. In other example embodiments, the first sensing pattern 210 may be directly formed on the bottom face of the phase retardation layer 220, and the second sensing pattern 230 may be directly formed on a bottom face of the polarization plate 300.

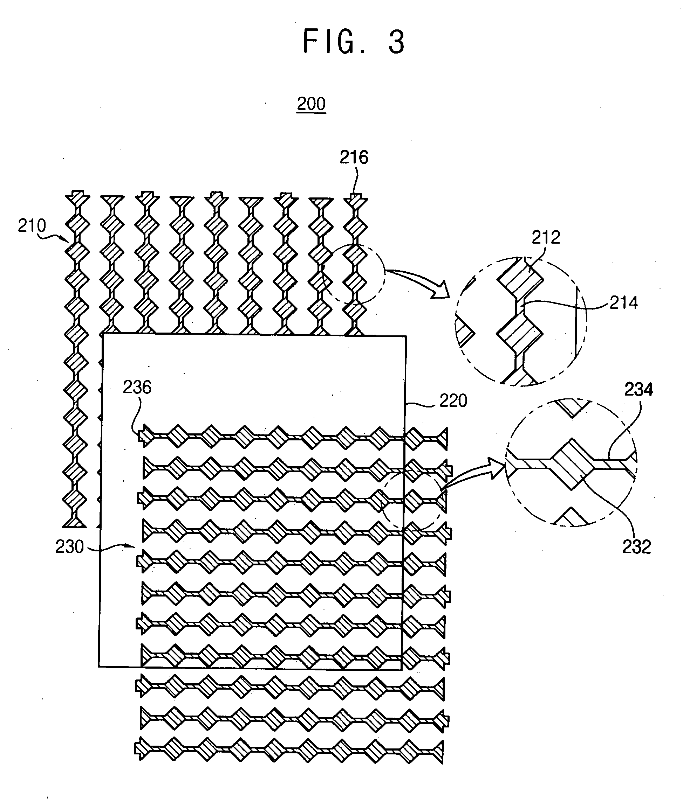

FIG. 3 is an exploded plan view illustrating the phase retardation layer 220 and the touch sensing structure 200 of the display device in accordance with example embodiments.

Referring to FIGS. 1 and 3, the touch sensing structure 200 includes the first and the second sensing patterns 210 and 230 directly disposed on the first and the second faces of the phase retardation layer 220, respectively. The first sensing pattern 210 extends along a direction substantially different from a direction where the second sensing pattern 230 extends. For example, the first sensing pattern 210 may extend in a direction substantially perpendicular to a direction in which the second sensing pattern 230 extends.

As illustrated in FIG. 3, the first sensing pattern 210 may include a plurality of first sensing cells 212, a plurality of first connecting portions 214 and a plurality of first pads 216. In example embodiments, each of the first sensing cells 212 may have a substantially rhombus shape, a substantially diamond shape, etc. Adjacent first sensing cells 212 may be connected to each other by one first connecting portion 214 interposed therebetween. In this manner, the plurality of first sensing cells 212 may be connected to one another by interposing the plurality of first connecting portions 214 therebetween. The first sensing cells 212 may be regularly arranged on the first face of the phase retardation layer 220. The first connecting portions 214 may connect the first sensing cells 212 having the same x-coordinates or the same y-coordinates. In some example embodiments, each of the first sensing cells 212 may have various shapes such as a substantially polygonal shape, a substantially circular shape, a substantially elliptical shape, a substantially track shape, etc. The shapes of the first sensing cells 212 may mainly depend on the shape of the display panel 100 of the display device.

The first sensing pattern 210 may additionally include the first pads 216. The first pads 216 may be electrically connected to the first sensing cells 212 by the row or by the column. Further, the first pads 216 may be disposed at an upper portion of the first face of the phase retardation layer 220 or a lower portion of the first face of the phase retardation layer 220 by the row or by the column. In some example embodiments, the first pads 216 may be formed on both of the upper and the lower portions of the phase retardation layer 220.

In example embodiments, the first sensing pattern 210 may include a transparent conductive material. For example, a first transparent conductive layer (not illustrated) may be formed on first face of the phase retardation layer 220, and then the first transparent conductive layer may be patterned, so that the first sensing pattern 210 having the above-described structure may be directly formed on the first face of the phase retardation layer 220. The first sensing pattern 210 may be obtained using indium tin oxide (ITO), zinc tin oxide (ZTO), gallium oxide, indium zinc oxide (IZO), zinc oxide, tin oxide, etc. These may be used alone or in a combination thereof. Further, each of the first sensing pattern 210 may have a single layer structure or a multi layer structure.

Referring now to FIG. 3, the second sensing pattern 230 may include a plurality of second sensing cells 232, a plurality of second connecting portions 234 and a plurality of second pads 236. In example embodiments, each of the second sensing cells 232 may also have a substantially rhombus shape, a substantially diamond shape, etc. The second connecting portions 234 may be disposed between adjacent second sensing cells 232. That is, adjacent second sensing cells 232 may be spaced apart from each other by a distance substantially the same as a width of one second connecting portion 232. In this manner, the plurality of second sensing cells 232 may be arranged on the second face of the phase retardation layer 220. The second sensing cells 232 may also regularly disposed on the second face of the phase retardation layer 220. Here, the second sensing cells 232 may be partially overlapped relative to the first sensing cells 212. Alternatively, the second sensing pattern 230 may not substantially overlap with respect to the first sensing pattern 210. For example, each of the first sensing cells 212 and each of the second sensing cells 232 may be alternately formed on the first face and the second face of the phase retardation layer 220, respectively.

The second connecting portions 234 may connect the second sensing cells 232 having the same x-coordinates or the same y-coordinates. That is, the plurality of second sensing cells 232 and the plurality of second connecting portions 234 may be arranged on the second face of the phase retardation layer 220 by the row or by the column. In some example embodiments, each of the second sensing cells 232 may have various shapes such as a substantially polygonal shape, a substantially circular shape, a substantially elliptical shape, a substantially track shape, etc. The second pads 236 of the second sensing pattern 230 may be connected to the second sensing cells 232 by the row or by the column. Namely, the second pads 236 may be disposed on a left portion of the second face of the phase retardation layer 220 or the right portion of the second face of the phase retardation layer 220 by the row. Alternatively, the second pads 236 may be formed on both of the left and the right portions of the second face of the phase retardation layer 220.

According to example embodiments, the second sensing pattern 230 may be formed using a transparent conductive material. For example, a second transparent conductive layer (not illustrated) may be formed on the second face of the phase retardation layer 220. The second sensing pattern 230 may include indium tin oxide, zinc tin oxide, gallium oxide, indium zinc oxide, zinc oxide, tin oxide, etc. These may be used alone or in a combination thereof. Further, each of the first sensing pattern 210 may have a single layer structure or a multi layer structure.

In example embodiments, the second sensing pattern 230 may be formed using transparent conductive materials substantially the same as or substantially similar to those of the first sensing pattern 210. Alternatively, the transparent conductive materials included in the second sensing pattern 230 may be different from those included in the first sensing pattern 210.

When a user or an object contacts the display device including the touch sensing structure 200 having the above-described configuration, a variation of electrostatic capacity at a contact position of the display device caused by the user or the object may be generated between related the first and the second sensing patterns 210 and 230, and then the variation of electrostatic capacity may be applied to a driving circuit (not illustrated) through the metal wiring (not illustrated), and a position detecting wiring (not illustrated). The variation of electrostatic capacity may be converted to an electrical signal by the driving circuit so that the contact position of the display device may be identified.

In some example embodiments, a protection layer (not illustrated) may be disposed on the phase retardation layer 220 and the second sensing pattern 230. The protection layer may be formed using a transparent insulation material.

According to example embodiments of the invention, the display device may include the touch sensing structure 200 directly formed on the phase retardation layer 220, so that the display device may have a reduced thickness because the touch sensing structure 200 may not need a base film having a large thickness of 0.1 mm to 0.5 mm for supporting the sensing patterns of the conventional touch sensing structure. When the touch sensing structure 200 may be directly formed on the phase retardation layer 220 without any additional layer, the transmittance of light passing the touch sensing structure 200 may be increased while reducing the reflectivity of light generated from the display panel 100. Thus, the optical loss of the display device having the touch sensing structure may be considerably reduced. Further, the display device according to example embodiments may have a simple configuration without any additional layers comparing to that of the conventional display device, such that the efficiency and yield of manufacturing process for the display panel may be greatly improved.

Referring now to FIG. 1, the polarization plate 300 may be disposed on the second face of the retardation layer 220 on which the second sensing pattern 230 may be arranged. The polarization plate 300 may prevent reflection of external light to thereby improve a visibility of the display device. The polarization plate 300 may align the direction of light passing through the phase retardation layer 220. For example, the polarization plate 300 may allow one of the polarizing components of the incident light to pass the polarization plate 300, while the polarization plate 300 may absorb or distribute the other polarizing components of the incident light. The polarization plate 300 may include an iodine type polarizing film, a dye-based polarizing film, a polyene-based polarizing film, etc. In example embodiments, polarization plate 300 may have an absorption axis and a polarization axis. Here, the absorption axis may be a stretch-aligned optical axis that may include iodine ion chains or dichromic dyes. At the absorption axis of the polarization plate 300, the incident light may interact with electrons in the polarization plate 300, so that the energy of the incident light may converted into the energy of the electrons to there by extinct one of the polarizing components of the incident light. The polarization axis may be substantially perpendicular to the absorption axis. The other of the polarizing components of the incident light may pass through the polarization plate 300 along the polarization axis.

The window 400 may be disposed on the polarization plate 300. For example, the window 400 may include a transparent material such as glass, quartz, transparent resin, etc. The window 400 may protect the display panel 100 and the underlying elements from external impact, moisture, particles, etc.

Referring now to FIG. 1, the adhesion layer 190 is disposed between the display panel 100 and the touch sensing structure 200. The adhesion layer 190 may fill a space between the display panel 100 and the touch sensing structure 200, so that a contact area between the display panel 100 and the touch sensing structure 200. Thus, the display panel 100 may be stably combined with the touch sensing structure 200.

The adhesion layer 190 includes a side-chain crystallizable polymer. The adhesion layer 190 may further include a pressure sensitive adhesive. In some example embodiments, the adhesive layer 190 may further include additives such as plasticizers, tackifiers, fillers, cross-linking agents, etc.

When the adhesion layer 190 includes the pressure sensitive adhesive, a bonding strength of the adhesion layer 190 relative to the display panel 100 and/or the touch sensing structure 200 may increase depending on a pressure applied to the adhesion layer 190. For example, a transparent film including the pressure sensitive adhesive may be arranged between the display panel 100 and the touch sensing structure 200, and then a pressure may be applied to combine the display panel 100 with the touch sensing structure 200 using the adhesion layer 190.

The adhesion layer 190 includes the side-chain crystallizable polymer. The bonding strength of the adhesion layer 190 varies in accordance with a temperature of the adhesion layer 190. The side-chain crystallizable polymer melts at a predetermined temperature, so that the bonding strength of the adhesion layer 190 decreases. That is, when applying heat to the adhesion layer 190, the side-chain crystallizable polymer melts to transform into a liquid state. Therefore, the adhesion layer 190 may be peeled off. The side-chain crystallizable polymer has a melting temperature higher than 30°C (i.e. higher than room temperature). For example, the side-chain crystallizable polymer may have a melting temperature of 50 ºC to 150 ºC, preferably a melting temperature of 70 ºC to 90 ºC.

The pressure sensitive adhesion in the adhesive layer 190 may include natural rubber adhesion, styrene/butadiene latex-based adhesive, ABA block copolymer thermoplastic rubber (wherein A indicates a thermoplastic polystyrene end block, and B denotes an intermediate block of polyisoprene rubber, polybutadiene rubber, polyethylene rubber or polybutylene rubber), butyl rubber, polyisobutylene, acryl-based polymer adhesive such as poly acrylate and vinyl acetate/acryl ester copolymer, vinyl ether-based polymer adhesive such as polyvinyl methyl ether, polyvinyl ethyl ether and polyvinyl isobuthyl ether.

The pressure sensitive adhesive includes the acryl-based polymer adhesive, the pressure sensitive adhesive may include ethylhexyl acrylate or hydroxyethyl acrylate. For example, the pressure sensitive adhesive may include a copolymer having about 80wt% to about 95wt% of 2-ethylhexyl acrylate and about 5wt% to about 20wt% of 2-hydroxyethyl acrylate

The side-chain crystallizable polymer includes a copolymer having 20 wt% to 50 wt% of alkyl acrylate ester having an alkyl side chain having 16 or more carbon atoms, alkyl methacrylate ester having an alkyl side chain having 16 or more carbon atoms or a mixture thereof, 40 wt% to 70 wt% of alkyl acrylate ester having an alkyl side chain having 1 to 6 carbon atoms, alkyl methacrylate ester having an alkyl side chain having 1 to 6 carbon atoms or a mixture thereof and 2 wt% to 10 wt% of ethylenically unsaturated compounds each including a carboxyl group. For example, the alkyl acrylate ester and/or alkyl methacrylate ester (hereinafter, referred to as "methacrylate") each including a linear alkyl side chain having 16 or more carbon atoms may include methacrylate having a linear alkyl side chain having 16 or more carbon atoms such as hexadecyl methacrylate, stearyl methacrylate, docosyl methacrylate, triacontamethacrylate, etc. For example, the ethylenically unsaturated monomer containing the carboxyl group may include acryl acid, methacryl acid, crotomic acid, itaconic acid, maleic acid, fumaric acid, etc. For example, the methacrylate having a linear alkyl side chain having 1 to 6 carbon atoms may include methyl methacrylate, ethyl methacrylate, buthyl methacrylate, isobuthyl methacrylate, tert-buthyl methacrylate, hexyl methacrylate, cyclohexyl methacrylate, isoamyl methacrylate, etc.

In example embodiments, the adhesion layer 190 may include about 1 wt% to about 30 wt% of the side-chain crystallizable polymer, preferably about 5 wt% to about 15 wt% of the side-chain crystallizable polymer. When the adhesion layer 190 includes about 1 wt% to about 30 wt% of the side-chain crystallizable polymer, the adhesion layer 190 may have a sufficient bonding strength at a temperature lower than the melting temperature of the side-chain crystallizable polymer, and the adhesion layer 190 may be easily peeled off at a temperature substantially higher than the melting temperature of the side-chain crystallizable polymer.

An average molecular weight of the side-chain crystallizable polymer in 3,000 to 25,000, preferably 4,000 to 15,000. When the average molecular weight of the side-chain crystallizable polymer is in the range (i.e., 3,000 to 25,000), the bonding strength of the adhesion layer 190 may properly decrease by heating the adhesion layer 190, and the adhesion layer 190 may leave fewer residues after peeling off the adhesion layer 190.

In example embodiments, the adhesion layer 190 may have a thickness of about 50 µm to about 200 µm. When the thickness of the adhesion layer 190 is below about 50 µm, the bonding strength of the adhesion layer 190 may decrease below a predetermined value. When the thickness of the adhesion layer 190 is above about 200 µm, a thickness of the display device may increase.

The bonding strength of the adhesion layer 190 may vary depending on the temperature of the adhesion layer 190. When the temperature increases, the bonding strength of the adhesion layer 190 may decrease. In example embodiments, the adhesion layer 190 may have a relatively large bonding strength above about 0.5 N at a temperature below about 35 ºC, whereas the adhesion layer 190 may have a relatively small bonding strength below about 0.3 N at a temperature above about 70 ºC. When the bonding strength of the adhesion layer 190 is below about 0.4 N, the adhesion layer 190 may start to be peeled off. When the bonding strength of the adhesion layer 190 is below about 0.3 N, the display panel 100 and the touch sensing structure 200 may be easily separated while the use of the display device by an operator.

According to example embodiments, the display device may include touch sensing structure 200 having the phase retardation layer 220, so that the display device may not need an additional base film for supporting the sensing patterns 210 and 230. Therefore, the base film may not change polarization characteristics of incident light.

Referring now to FIG. 1, the polarization plate 300 may be disposed on the touch sensing structure 200. Therefore, the reflection of the external light on the touch sensing structure 200 may be reduced or prevented, so that quality of images from the display device may be improved. Further, the display device may include the adhesion layer 190 having the pressure sensitive adhesion and the side-chain crystallizable polymer. The adhesion layer 190 may have a relatively large bonding strength thereby to combine the touch sensing structure 200 with the display panel 100 at a room temperature, and the adhesion layer 190 may have a sufficiently small bonding strength to be easily peeled off at a temperature above about the melting temperature of the side-chain crystallizable polymer (e.g., about 70 ºC). The adhesion layer 190 may leave fewer residues on the touch sensing structure 200 and the display panel 100 after the peel-off process, so that the residues may be easily removed.

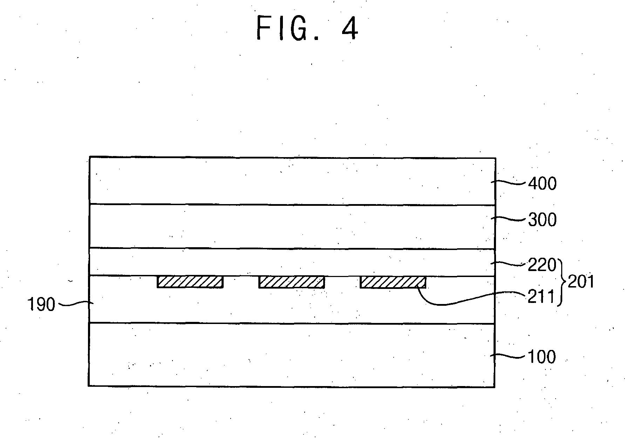

FIG. 4 is a cross sectional view illustrating a display device in accordance with another example embodiments. In FIG. 4, the display device has a construction substantially the same as or substantially similar to that of the display device described with reference to FIGS. 1 to 3, except for a touch sensing structure 201.

Referring to FIG. 4, the display device includes a display panel 100, the touch sensing structure 201, a polarization plate 300, a window 400, etc.

The touch sensing structure 201 is disposed on the display panel 100, and an adhesion layer 190 is disposed between the touch sensing structure 201 and the display panel 100 to improve a bonding strength therebetween.

The touch sensing structure 201 includes a phase retardation layer 220 and sensing patterns 211. In example embodiments, the sensing patterns 211 may have a construction substantially the same as or substantially similar to one of the first and the second sensing patterns 210 and 230 described with reference to FIG. 3. In some example embodiments, the sensing patterns 211 may have a combination structure of the first and the second sensing patterns 210 and 230 illustrated in FIG. 3. For example, the sensing patterns 211 may have first sensing patterns and second sensing patterns 210 and 230 alternately arranged on the phase retardation layer 220 along a row direction or a column direction.

The polarization plate 300 and the window 400 are sequentially disposed on the touch sensing structure 201. Here, the polarization plate 300 and the window 400 may have constructions substantially the same as or substantially similar to the polarization plate 300 and the window 400 described with reference to FIG. 1.

Although the sensing patterns 211 may be disposed between the phase retardation layer 220 and the adhesion layer 190 in FIG. 4, the invention may not be limited thereto. For example, the sensing patterns may be disposed between the phase retardation layer 220 and the polarization plate 300.

The display device may not require an additional base film for the touch sensing structure 201, so that the polarization plate 300 may be disposed on the touch sensing structure 201. Therefore, the display device may include the touch sensing structure 201 which may have improved reflectivity and may be easily reworkable.

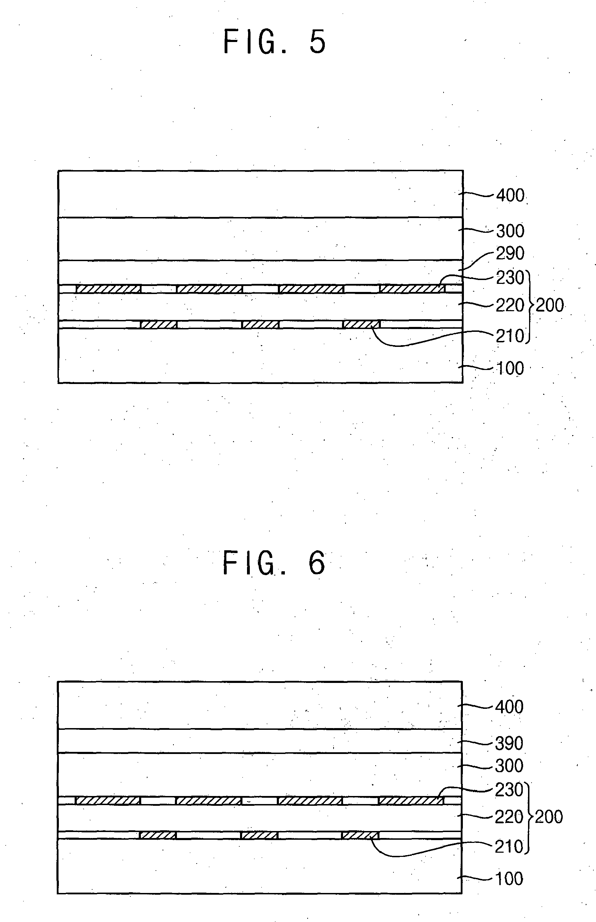

FIG. 5 is a cross sectional view illustrating a display device in accordance with still another example embodiments. In FIG. 5, the display device has a construction substantially the same as or substantially similar to that of the display device described with reference to FIG. 1, except for an adhesion layer 290.

Referring to FIG. 5, the display device includes a display panel 100, a touch sensing structure 200, a polarization plate 300, a window 400, etc.

The touch sensing structure 200 disposed on the display panel 100 includes a phase retardation layer 220 and a plurality of sensing patterns. Here, the touch sensing structure 200 includes sensing patterns 210 and 230 which may have constructions substantially the same as or substantially similar to one of the first and the second sensing patterns 210 and 230 described with reference to FIG. 3. The sensing patterns 210 and 230 are disposed on opposite faces of the phase retardation layer 220 in FIG. 5. However, the invention may not be limited thereto. For example, the sensing patterns may be disposed on one of the opposite faces of the phase retardation layer 220, and may have a construction substantially the same as or substantially similar to that of the sensing patterns 211 described with reference to FIG. 4.

The adhesion layer 290 is disposed between the touch sensing structure 200 and the polarization plate 300. The window 400 is disposed on the polarization plate 300. The adhesion layer 290 combines the polarization plate 300 with the touch sensing structure 200, and includes a side-chain crystallizable polymer. The adhesion layer 290 may further include a pressure sensitive adhesion. Here, the adhesion layer 290 may include a material substantially the same as or substantially similar to that of the adhesion layer 190 described with reference to FIG. 1.

According to example embodiments, the display device may include the adhesion layer 290 having the pressure sensitive adhesion and the side-chain crystallizable polymer. The adhesion layer 290 may have a relatively large bonding strength to thereby combine the touch sensing structure 200 with the polarization plate 300 at a room temperature. Additionally, the adhesion layer 290 may have a relatively small bonding strength to be easily peeled off at a temperature above about the melting temperature of the side-chain crystallizable polymer (e.g., about 70 ºC). The adhesion layer 290 may leave fewer residues on the touch sensing structure 200 and the polarization plate 300 after the peel-off process, so that the residues may be easily removed.

FIG. 6 is a cross sectional view illustrating a display device in accordance with still another example embodiments. In FIG. 6, the display device has a construction substantially the same as or substantially similar to that of the display device described with reference to FIG. 1, except for an adhesion layer 390.

Referring to FIG. 6, the display device includes a display panel 100, a touch sensing structure 200, a polarization plate 300, the adhesion layer 390, a window 400, etc. The touch sensing structure 200 disposed on the display panel 100 includes a phase retardation layer 220 and a plurality of sensing patterns.

The polarization plate 300 and the window 400 are sequentially disposed on the touch sensing structure 200, and the adhesion layer 390 is disposed between the polarization plate 300 and the window 400. The adhesion layer 390 combines the polarization plate 300 with the window 400, and may include a pressure sensitive adhesion and a side-chain crystallizable polymer. Here, the adhesion layer 390 may include a material substantially the same as or substantially similar to that of the adhesion layer 190 described with reference to FIG. 1.

According to example embodiments, the display device may include the adhesion layer 390 having the pressure sensitive adhesion and the side-chain crystallizable polymer. The adhesion layer 390 may have a sufficiently large bonding strength thereby to combine the window 400 with the polarization plate 300 at a room temperature, and the adhesion layer 390 may have a sufficiently small bonding strength to be easily peeled off at a temperature above about the melting temperature of the side-chain crystallizable polymer (e.g., about 70 ºC). The adhesion layer 390 may leave fewer residues on the window 400 and the polarization plate 300 after the peel-off process, so that the residues may be easily cleaned.

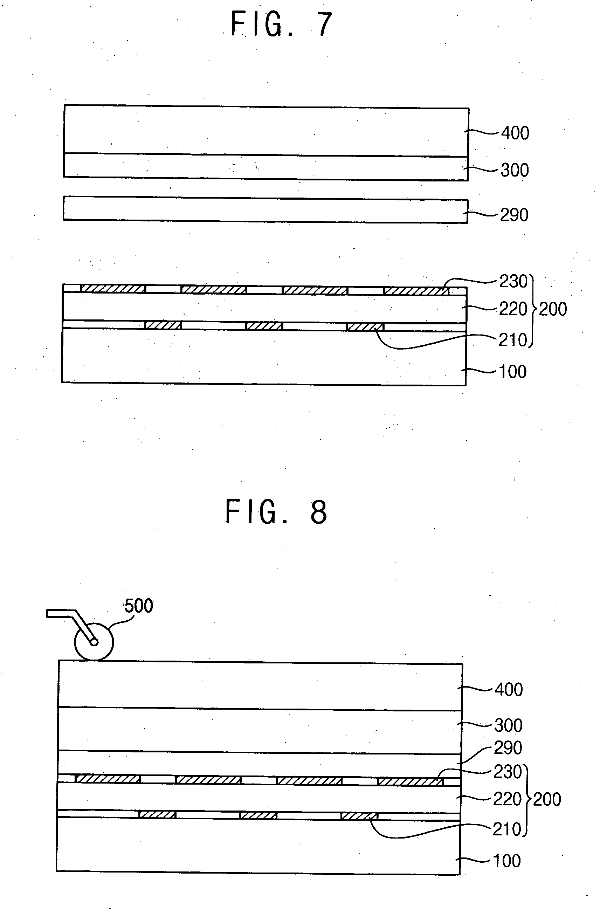

FIGS. 7 to 10 are cross sectional views illustrating a method of manufacturing a display device in accordance with example embodiments.

Referring to FIG. 7, after a display panel 100 is provided, a touch sensing structure 200 is formed on the display panel 100.

In example embodiments, a buffer layer and a switching structure may be formed on a first substrate by repeatedly performing a deposition process and a patterning process. Then, an insulating interlayer may be formed on the switching structure to electrically insulate the switching structure from upper elements successively formed. A first electrode may be formed through the insulating interlayer to electrically contact the switching structure. An organic light emitting structure may be formed on the first electrode using an organic material, and a second electrode may be formed on the organic light emitting structure. The first substrate including the switching structure and the organic light emitting structure may be combined with a second substrate to form the display panel 100.

Referring now to FIG. 7, the touch sensing structure 200 including a phase retardation layer 220 and sensing patterns 210 and 230 is formed on the display panel 100. For example, the phase retardation layer 220 is formed using a transparent polymer such as polyethyleneterephthalate, triacetylcelluose, etc.

A first transparent conductive material layer is formed on a first face of the phase retardation layer 220 using indium tin oxide, zinc tin oxide, etc. The first transparent conductive material layer is patterned to obtain first sensing pattern 210. A second transparent conductive material layer is formed on a second face of the phase retardation layer 220, and the second transparent conductive material layer is patterned to obtain second sensing pattern 230. The touch sensing structure 200 may be uniformly arranged on the display panel 100. The polarization plate 300 is formed on the window 400.

The polarization plate 300 may include at least one of polarization films and at least one of protection layers. For example, the polarization film may be formed using a polyvinyl alcohol film and dyes. The protection layer for protecting the polarization film may be additionally formed in the polarization plate 300.

The polarization plate 300 is formed on the window 400. Although it is not illustrated in FIG. 7, an additional adhesion layer may be formed between the polarization plate 300 and the window 400 to improve a bonding strength therebetween. Then, the polarization plate 300 and window 400 may be arranged above the display panel 100 and the touch sensing structure 200.

Referring now to FIG. 7, an adhesion layer 290 is disposed between the touch sensing structure 200 and the polarization plate 300.

The adhesion layer 290 may be provided by mixing a pressure sensitive adhesive with a side-chain crystallizable polymer. The adhesion layer 290 may have a predetermined thickness and has a solid film state at a room temperature (30 ºC). In an example embodiment, the adhesion layer 290 may have a melting temperature above about 50ºC, preferably above about 70 ºC. The adhesion layer 290 may include a material substantially the same as or substantially similar to that of the adhesion layer 190 described with reference to FIGS. 1 to 3.

Referring to FIG. 8, a pressure may be applied to the adhesion layer 290 to combine the touch sensing structure 200 with the polarization plate 300.

When the adhesion layer 290 includes the pressure sensitive adhesive, a bonding strength of the adhesion layer 290 may increase by a pressing process. Therefore, the touch sensing structure 200 may be physically bonded to the polarization plate 300 through the adhesion layer 290. In example embodiments, the pressing process may be performed using a pressure member 500 such as a roller. With the above-described processes, the display device may be manufactured primarily.

An adhesion condition between the touch sensing structure 200 and the polarization plate 300 may be tested. When the adhesion condition between the touch sensing structure 200 and the polarization plate 300 does not meet a required condition, a recombination process may be required.

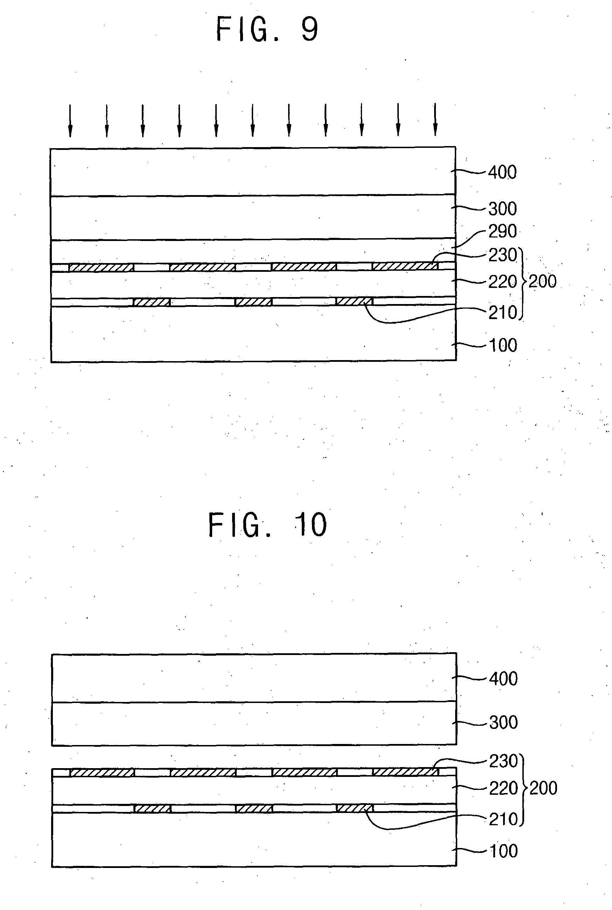

Referring to FIG. 9, the adhesion layer 290 is heated to reduce the bonding strength of the adhesion layer 290. The adhesion layer 290 includes the side-chain crystallizable polymer, so that the bonding strength of the adhesion layer 290 decreases at a relatively high temperature. The adhesion layer 290 may have a relatively small bonding strength below about 0.3 N at a temperature above about 70 ºC. For example, the adhesion layer 290 may be heated at a temperature of about 50 ºC to about 150 ºC, preferably at a temperature of about 70 ºC to about 90 ºC. The adhesion layer 290 may be thermally treated through the window 400 or the display panel 100. When the adhesion layer 290 is heated through the window 400, the display panel 100 may not be damaged by a thermal energy. The direction for heating the adhesion layer 290 may be indicated using arrows in FIG. 9.

Referring to FIG. 10, the polarization plate 300 and the window 400 is separated from the display panel 100 and the touch sensing structure 200.

The adhesion layer 290 has a relatively small bonding strength below about 0.3 N by the heating process, so that the polarization plate 300 may be easily separated from the touch sensing structure 200. After the separation process, fewer residues of the adhesion layer 290 may remain on the touch sensing structure 200 and the polarization plate 300, and thus the residues may be easily removed using a cleaning solution. Then, the recombination process may be performed to bond the polarization plate 300 to the touch sensing structure 200.

Although the adhesion layer 290 may be formed between the touch sensing structure 200 and the polarization plate 300, the invention may not be limited thereto. For example, an adhesion layer may be formed between the polarization plate 300 and the window 400 or between the touch sensing structure 200 and the display panel 100.

According to example embodiments, the adhesion layer 290 is applied to the display panel 100, so that the polarization plate 300 is easily removed from the touch sensing structure 200 when an adhesion failure occurs. The display device according to example embodiments includes polarization plate 300 on the touch sensing structure 200 including a polymer material. Therefore, polarization plate 300, which is fixed on the window 400, is combined with the touch sensing structure 200, so that the bonding process and the recombination process are easily performed. As a result, the efficiency and yield of manufacturing process for the display panel is greatly improved.

## Claims

1. A display device comprising:
a display panel (100);
a touch sensing structure (200) disposed on the display panel (100), the touch sensing structure (200) including a phase retardation layer (220) and at least one sensing pattern (210, 220) disposed on at least one face of the phase retardation layer (220);
a polarization plate (300) disposed on the touch sensing structure (200);
a window (400) disposed on the polarization plate (300); and
an adhesion layer (190) disposed between at least one of the display panel (100) and the touch sensing structure (200), between the touch sensing structure (200) and the polarization plate (300), and between the polarization structure (300) and the window (400), **characterized in that** the adhesion layer (190) includes a side-chain crystallizable polymer having a melting temperature higher than 30 °C and an average molecular weight of 3,000 to 25,000, wherein the side-chain crystallizable polymer is being obtained by copolymerization of
(i) 20 wt% to 50 wt% of alkyl acrylate ester or alkyl methacrylate ester, each having an alkyl side chain having 16 or more carbon atoms;
(ii) 40 wt% to 70 wt% of alkyl acrylate ester or alkyl methacrylate ester, each having an alkyl side chain having 1 to 6 carbon atoms; and
(iii) 2 wt% to 10 wt% of ethylenically unsaturated compounds, each including a carboxyl group.

2. The display device of claim 1, wherein the side-chain crystallizable polymer has a melting temperature of 70 °C to 90 °C.

3. The display device of claim 1, wherein the adhesion layer (190) further includes a pressure sensitive adhesive.

4. The display device of claim 1, wherein the adhesion layer (190) includes 1 wt% to 30 wt% of the side-chain crystallizable polymer.

5. The display device of claim 3, wherein the pressure sensitive adhesive includes natural rubber adhesive, styrene/butadiene latex-based adhesive, ABA block copolymer thermoplastic rubber (in which A indicates a thermoplastic polystyrene end block, and B denotes an intermediate block of polyisoprene rubber, polybutadiene rubber, polyethylene rubber or polybutylene rubber), butyl rubber, polyisobutylene, acryl-based polymer adhesive or vinyl ether-based polymer adhesive.

6. The display device of claim 1, wherein the adhesion layer (190) has a thickness of 50 µm to 200 µm.

7. The display device of claim 1, wherein the phase retardation layer (220) includes a λ/4 phase retardation film, and λ is a wavelength of 380nm to 780nm.

8. The display device of claim 1, wherein the phase retardation layer (220) includes polyethylene terephthalate or triacetyl cellulose.

9. The display device of claim 1, wherein the touch sensing patterns (210, 230) are directly disposed on opposite faces of the phase retardation layer (220).

10. The display device of claim 1, wherein the touch sensing patterns (210, 230) are disposed between the phase retardation layer (220) and the polarization plate (300), and touch sensing patterns (210, 230) are directly disposed on one face of the phase retardation layer (220).

11. The display device of claim 1, wherein the touch sensing patterns (210, 230) are disposed between the phase retardation layer (220) and the display panel (100), and touch sensing patterns (210, 230) are directly disposed on one face of the phase retardation layer (220).

12. A method of manufacturing a display device, comprising:
forming a display panel (100);
forming a touch sensing structure (200) on the display panel (100), the touch sensing structure (200) including a phase retardation layer (220) and at least one sensing pattern (210, 230) disposed on at least one face of the phase retardation layer (220);
forming a polarization plate (300) on the touch sensing structure (200);
providing an adhesion layer (190) including a side-chain crystallizable polymer having a melting temperature higher than 30 °C as defined in claim 1;
arranging the adhesion layer (190) at least one of between the display panel (100) and the touch sensing structure (200), between the touch sensing structure (200) and the polarization plate (300), and between the polarization plate (300) and the window (400) to bond the display panel (100), the touch sensing structure (200), the polarization plate (300) or the window (400), respectively;
testing an adhesion failure; and
heating the adhesion layer (190) to remove the adhesion layer when the adhesion failure occurs.

13. The method of claim 12, wherein heating the adhesion layer includes heating the adhesion layer at a temperature of 70 °C to 90 °C.

14. The method of claim 12, wherein heating the adhesion layer (190) includes heating the adhesion layer (190) through the window (400).

## Patentansprüche

1. Anzeigevorrichtung, aufweisend:
eine Anzeigetafel ( 100);
eine Berührungserfassungsstruktur (200), die auf der Anzeigetafel (100) angeordnet ist, wobei die Berührungserfassungsstruktur (200) eine Phasenverzögerungsschicht (220) und zumindest ein Erfassungsmuster (210, 220), das auf zumindest einer Fläche der Phasenverzögerungsschicht (220) angeordnet ist, aufweist;
eine Polarisationsplatte (300), die auf der Berührungserfassungsstruktur (200) angeordnet ist;
ein Fenster (400), das auf der Polarisationsplatte (300) angeordnet ist; und
eine Haftschicht (190), die zwischen der Anzeigetafel (100) und der Berührungserfassungsstruktur (200) und/oder zwischen der Berührungserfassungsstruktur (200) und der Polarisationsplatte (300) und/oder zwischen der Polarisationsstruktur (300) und dem Fenster (400) angeordnet ist, **dadurch gekennzeichnet, dass** die Haftschicht (190) ein kristallisierbares Seitenkettenpolymer aufweist, das eine Schmelztemperatur von über 30°C und ein mittleres Molekulargewicht von 3000 bis 25000 aufweist, wobei man das kristallisierbare Seitenkettenpolymer durch Copolymerisation von Folgendem erhält:
(i) 20 Gew.-% bis 50 Gew.-% Alkylacrylatester oder Alkylmethacrylatester, die jeweils eine Alkylseitenkette, die 16 oder mehr Kohlenstoffatome aufweist, aufweisen;
(ii) 40 Gew.-% bis 70 Gew.-% Alkylacrylatester oder Alkylmethacrylatester, die jeweils eine Alkylseitenkette, die 1 bis 6 Kohlenstoffatome aufweist, aufweisen; und
(iii) 2 Gew.-% bis 10 Gew.-% ethylenisch ungesättigte Verbindungen, die jeweils eine Carboxylgruppe aufweisen.

2. Anzeigevorrichtung nach Anspruch 1, wobei das kristallisierbare Seitenkettenpolymer eine Schmelztemperatur von 70°C bis 90°C aufweist.

3. Anzeigevorrichtung nach Anspruch 1, wobei die Haftschicht (190) ferner einen druckempfindlichen Klebstoff aufweist.

4. Anzeigevorrichtung nach Anspruch 1, wobei die Haftschicht (190) 1 Gew.-% bis 30 Gew.-% des kristallisierbaren Seitenkettenpolymers aufweist.

5. Anzeigevorrichtung nach Anspruch 3, wobei der druckempfindliche Klebstoff Naturkautschukklebstoff, Styrol/Butadien-Klebstoff auf der Basis von Latex, thermoplastischen ABA-Block-Copolymer-Kautschuk (wobei A einen thermoplastischen Polystyrol-Endblock angibt und B einen Zwischenblock aus Polyisopren-Kautschuk, Polybutadien-Kautschuk, Polyethylen-Kautschuk oder Polybutylen-Kautschuk angibt), Butyl-Kautschuk, Polyisobutylen, Polymerklebstoff auf der Basis von Acryl oder Polymerklebstoff auf der Basis von Vinylether aufweist.

6. Anzeigevorrichtung nach Anspruch 1, wobei die Haftschicht (190) eine Dicke von 50 µm bis 200 µm aufweist.

7. Anzeigevorrichtung nach Anspruch 1, wobei die Phasenverzögerungsschicht (220) einen λ/4-Phasenverzögerungsfilm aufweist, und λ eine Wellenlänge von 380nm bis 780nm ist.

8. Anzeigevorrichtung nach Anspruch 1, wobei die Phasenverzögerungsschicht (220) Polyethylenterephthalat oder Triacetylcellulose aufweist.

9. Anzeigevorrichtung nach Anspruch 1, wobei die Berührungserfassungsmuster (210, 230) direkt auf gegenüberliegenden Flächen der Phasenverzögerungsschicht (220) angeordnet sind.

10. Anzeigevorrichtung nach Anspruch 1, wobei die Berührungserfassungsmuster (210, 230) zwischen der Phasenverzögerungsschicht (220) und der Polarisationsplatte (300) angeordnet sind und Berührungserfassungsmuster (210, 230) direkt auf einer Fläche der Phasenverzögerungsschicht (220) angeordnet sind.

11. Anzeigevorrichtung nach Anspruch 1, wobei die Berührungserfassungsmuster (210, 230) zwischen der Phasenverzögerungsschicht (220) und der Anzeigetafel (100) angeordnet sind und Berührungserfassungsmuster (210, 230) direkt auf einer Fläche der Phasenverzögerungsschicht (220) angeordnet sind.

12. Verfahren zur Herstellung einer Anzeigevorrichtung, aufweisend:
Ausbilden einer Anzeigetafel (100);
Ausbilden einer Berührungserfassungsstruktur (200) auf der Anzeigetafel (100), wobei die Berührungserfassungsstruktur (200) eine Phasenverzögerungsschicht (220) und zumindest ein Erfassungsmuster (210, 230), das auf zumindest einer Fläche der Phasenverzögerungsschicht (220) angeordnet ist, aufweist;
Ausbilden einer Polarisationsplatte (300) auf der Berührungserfassungsstruktur (200);
Bereitstellen einer Haftschicht (190), die ein kristallisierbares Seitenkettenpolymer aufweist, das eine Schmelztemperatur über 30°C aufweist, wie in Anspruch 1 definiert;
Anordnen der Haftschicht (190) zwischen der Anzeigetafel (100) und der Berührungserfassungsstruktur (200) und/oder zwischen der Berührungserfassungsstruktur (200) und der Polarisationsplatte (300) und/oder zwischen der Polarisationsplatte (300) und dem Fenster (400), um jeweils die Anzeigetafel (100), die Berührungserfassungsstruktur (200), die Polarisationsplatte (300) oder das Fenster (40) zu verbinden;
Testen einer Beeinträchtigung des Klebevermögens; und
Erhitzen der Haftschicht (190), um die Haftschicht zu entfernen, wenn eine Beeinträchtigung des Klebevermögens auftritt.

13. Verfahren nach Anspruch 12, wobei das Erhitzen der Haftschicht das Erhitzen der Haftschicht bei einer Temperatur von 70°C bis 90°C aufweist.

14. Verfahren nach Anspruch 12, wobei das Erhitzen der Haftschicht (190) das Erhitzen der Haftschicht (190) durch das Fenster (400) aufweist.

## Revendications

1. Dispositif d'affichage comprenant :
un panneau d'affichage (100) ;
une structure de captage à touches (200) disposée sur le panneau d'affichage (100), la structure de captage à touches (200) comprenant une couche retardatrice de phase (220) et au moins un motif de captage (210, 220) disposé sur au moins une face de la couche retardatrice de phase (220) ;
une plaque de polarisation (300) disposée sur la structure de captage à touches (200) ;
une fenêtre (400) disposée sur la plaque de polarisation (300) ; et
une couche d'adhérence (190) disposée au moins d'une des manières entre un panneau d'affichage (100) et la structure de captage à touches (200), entre la structure de captage à touches (200) et la plaque de polarisation (300) ; et entre la structure de polarisation (300) et la fenêtre (400), **caractérisé en ce que** la couche d'adhérence (190) comprend un polymère cristallisable à chaîne latérale ayant une température de fusion supérieure à 30°C et un poids moléculaire moyen de 3000 à 25 000, ledit polymère cristallisable à chaîne latérale étant obtenu par copolymérisation de
(i) 20 % en poids à 50 % en poids d'un ester acrylate d'alkyle ou d'un ester méthacrylate d'alkyle, chacun ayant une chaîne latérale alkyle de 16 ou plus de 16 atomes de carbone ;
(ii) 40 % en poids à 70 % en poids d'un ester acrylate d'alkyle ou d'un ester méthacrylate d'alkyle, chacun ayant une chaîne latérale alkyle ayant 1 à 6 atomes de carbone; et
(iii) 2 % en poids à 10 % en poids de composés à insaturation éthylénique, chacun comprenant un groupe carboxyle.

2. Dispositif d'affichage suivant la revendication 1, dans lequel le polymère cristallisable à chaîne latérale a une température de fusion de 70°C à 90°C.

3. Dispositif d'affichage suivant la revendication 1, dans lequel la couche d'adhérence (190) comprend en outre un adhésif sensible à la pression.

4. Dispositif d'affichage suivant la revendication 1, dans lequel la couche d'adhérence (190) comprend 1 % en poids à 30 % en poids du polymère cristallisable à chaîne latérale.

5. Dispositif d'affichage suivant la revendication 3, dans lequel l'adhésif sensible à la pression comprend un adhésif à base de caoutchouc naturel, un adhésif à base d'un latex styrène/butadiène, un caoutchouc thermoplastique, un copolymère séquencé ABA (dans lequel A désigne un bloc terminal polystyrène thermoplastique, et B désigne un bloc intermédiaire de caoutchouc polyisoprène, de caoutchouc polybutadiène, de caoutchouc polyéthylène ou de caoutchouc polybutylène), un caoutchouc butyle, un polyisobutylène, un adhésif polymère à base acrylique ou un adhésif polymère à base d'éther vinylique.

6. Dispositif d'affichage suivant la revendication 1, dans lequel la couche d'adhérence (190) a une épaisseur de 50 µm à 200 µm.

7. Dispositif d'affichage suivant la revendication 1, dans lequel la couche retardatrice de phase (220) comprend un film retardateur de phase λ/4, et λ étant une longueur d'onde de 380 nm à 780 nm.

8. Dispositif d'affichage suivant la revendication 1, dans lequel la couche retardatrice de phase (220) comprend un poly(téréphtalate d'éthylène) ou de la triacétyl-cellulose.

9. Dispositif d'affichage suivant la revendication 1, dans lequel les motifs de captage à touches (210, 230) sont disposés directement sur les faces opposées de la couche retardatrice de phase (220).

10. Dispositif d'affichage suivant la revendication 1, dans lequel les motifs de captage à touches (210, 230) sont disposés entre la couche retardatrice de phase (220) et la plaque de polarisation (300), et les motifs de captage à touches (210, 230) sont disposés directement sur une face de la couche retardatrice de phase (220).

11. Dispositif d'affichage suivant la revendication 1, dans lequel les motifs de captage à touches (210, 230) sont disposés entre la couche retardatrice de phase (220) et le panneau d'affichage (100), et les motifs de captage à touches (210, 230) sont disposés directement sur une face de la couche retardatrice de phase (220).

12. Procédé de production d'un dispositif d'affichage, comprenant :
la formation d'un panneau d'affichage (100) ;
la formation d'une structure de captage à touches (200) sur le panneau d'affichage (100), la structure de captage à touches (200) comprenant une couche retardatrice de phase (220) et au moins un motif de captage (210, 230) disposé sur au moins une face de la couche retardatrice de phase (220) ;
la formation d'une plaque de polarisation (300) sur la structure de captage à touches (200) ;
la fourniture d'une couche d'adhérence (190) comprenant un polymère cristallisable à chaîne latérale ayant une température de fusion supérieure à 30°C de la manière définie dans la revendication 1 ;
la disposition de la couche d'adhérence (190) au moins d'une des manières entre le panneau d'affichage (100) et la structure de captage à touches (200), entre la structure de captage à touches (200) et la plaque de polarisation (300) et entre la plaque de polarisation (300) et la fenêtre (400) pour lier le panneau d'affichage (100), la structure de captage à touches (200), la plaque de polarisation (300) ou la fenêtre (400), respectivement ;
le test d'un défaut d'adhérence ; et
le chauffage de la couche d'adhérence (190) pour éliminer la couche d'adhérence lorsque le défaut d'adhérence se produit.

13. Procédé suivant la revendication 12, dans lequel le chauffage de la couche d'adhérence comprend le chauffage de la couche d'adhérence à une température de 70°C à 90°C.

14. Procédé suivant la revendication 12, dans lequel le chauffage de la couche d'adhérence (190) comprend le chauffage de la couche d'adhérence (190) à travers la fenêtre (400).
